**Europäisches Patentamt**

**European Patent Office**

**Office européen des brevets**

(11) Veröffentlichungsnummer: **0 151 742**
**B1**

(12) **EUROPÄISCHE PATENTSCHRIFT**

(45) Veröffentlichungstag der Patentschrift:
07.06.89

(21) Anmeldenummer: 84115127.7

(22) Anmeldetag: 11.12.84

(51) Int. Cl.⁴: **B 65 G   1/06**

(54) **Fördervorrichtung für Güter der verschiedensten Art mit/ohne Paletten.**

(30) Priorität: 11.02.84 DE 8404178 U

(43) Veröffentlichungstag der Anmeldung:
21.08.85 Patentblatt 85/34

(45) Bekanntmachung des Hinweises auf die Patenterteilung: 07.06.89 Patentblatt 89/23

(84) Benannte Vertragsstaaten:
AT BE CH DE FR GB IT LI LU NL SE

(56) Entgegenhaltungen:
DE–A– 1 556 071
FR–A– 2 167 292
US–A– 4 018 347
US–A– 4 345 524

(73) Patentinhaber: Westfalia -WFT- Fördertechnik GmbH
& Co.KG
D-4807 Borgholzhausen Oldendorf 58 (DE)

(72) Erfinder: Büschenfeld, Siegfried
Alte Schranke 15
D-4972 Löhne (DE)

(74) Vertreter: Hanewinkel, Lorenz, Dipl.-Phys.
Patentanwalt Ferrariweg 17a
D-4790 Paderborn (DE)

**Beschreibung**

Die Erfindung bezieht sich auf eine Fördervorrichtung für Güter der verschiedensten Art mit/ohne Paletten, wobei dieselbe aus mindestens zwei im parallelen Abstand nebeneinander verlaufenden Lager- und Führungsprofilen und einer eine Tragaufnahme für die Güter bzw. Paletten aufweisenden, in den Lager- und Führungsprofilen mittels antreibbarer Laufrollen und durch Führungsrollen verfahrbar geführten Transport- und Verschiebebühne besteht.

Aus der DE-A-1 556 071 ist ein mechanisiertes Palettenregallager bekannt geworden, welches mit quer- und längsverfahrbaren Hubwagen mit anheb- und absenkbaren Plattformen als Tragaufnahmen für die Güter arbeitet.

Diese Hubwagen müssen zur Aufnahme eines Gutes immer direkt unter das Gut fahren und dann wird deren Plattform zur Gutaufnahme angehoben.

Zur Gutabgabe müssen die Hubwagen genau an die Lagestelle fahren, wo dann durch Absenken ihrer Plattform das Gut abgegeben wird.

Dieser Arbeitsablauf erfordert einen exakten Fahrweg und ergibt dadurch eine verhältnismäßig, in der Lagertechnik nachteilige zeitaufwendige Ein- und Auslagerung der Güter.

Außerdem ist das Querfahrwerk des Hubwagens mit seiner Plattform zu einer höhenbewegbaren Einheit gekoppelt, was technisch aufwendig ist und den gesamten Hubwagen gewichts- und energiemäßig belastet.

Die US-A-4 018 347 zeigt ein mechanisches und elektrisch gesteuertes Transportsystem, das einen in Führungen verfahrbaren Wagen mit Laufwalzen, zwei Güter-Tragwalzen und einen Tastrollenhebel aufweist.

Die beiden Güter-Tragwalzen sind an Hebelarmen und unter Einwirkung von Federn zum Tragen des Gutes höhenverschwenkbar, wobei der Tastrollenhebel bei Gut-Belastung die Höhenverschwenkung steuert. Dabei wird lediglich eine Tragwalze über einen Freilaufantrieb durch Reibung verdreht, und zwar in Abhängigkeit von der Fahrbewegung des Wagens.

Beim Unterfahren des Gutes wird der Tastrollenhebel vom Gut nach unten verschwenkt und dann durch Reibungsschluß des Freilaufes die Tragwalze angetrieben. Das Gut kann hierbei erst von der Tragwalze erfaßt und verschoben werden, wenn dieses verhältnismäßig weit vom Wagen unterfahren worden ist. Dann stützt sich das Gut unter Gewichtsverteilung auf beiden Tragwalzen ab und die Federn sollen das Gut tragen.

Die Tragwalzen können aufgrund ihres großen Abstandes und aufgrund nur einer angetriebenen Tragwalze kein schnelles Auf- und Abschieben der Güter ermöglichen.

Dieses bekannte Transportsystem ist durch die federbelastete Höhenverschwenkung der Tragwalzen, dem komplizierten Antrieb und der Höhensteuerung der Tragwalzen durch den Tastrollenhebel verhältnismäßig aufwendig.

Der Erfindung liegt die Aufgabe zugrunde, eine Fördervorrichtung zu schaffen, mit der Güter mit oder ohne Paletten zum Ein- und Auslagern in Lagerplätzen in einfacher und sicherer Weise auf kurzem Fahrweg durch antreibbare Rollen und in entgegengesetzte Richtung verschiebbarer Bühne aufgenommen und abgegeben und an die gewünschten Stellen verfahren werden können und die gleichzeitig Lagerflächen für ein standsicheres Abstellen der Güter bzw. der Paletten mit Gütern bildet.

Diese Aufgabe wird erfindungsgemäß durch die kennzeichnenden Merkmale des Patentanspruches 1 gelöst. Die in den abhängigen Unteransprüchen aufgeführten Gestaltungsmerkmale stellen vorteilhafte Weiterbildungen der Aufgabenlösung dar.

Die erfindungsgemäße Fördervorrichtung weist zwei oder vier im Abstand nebeneinander angeordnete Lager- und Führungsprofile auf, auf denen die Paletten mit Gütern standsicher abgestellt werden können.

Durch die Anordnung von vier Profilen wird jede Palette an drei Stellen unterstützt und zwar in den beiden Seitenbereichen und im Mittelbereich, wodurch ein Durchbiegen der die Güter tragenden Palette ausgeschlossen und somit Beschädigungen der Paletten und Güter verhindert werden. Bei der Anordnung von zwei Profilen stützen sich die Paletten nur mit ihren beiden Seitenbereichen ab, jedoch ebenfalls sicher.

Die Lager- und Führungsprofile haben eine günstige Querschnittsgestaltung, die einerseits die sichere Abstellflächen für die Paletten geben und zum anderen gleichzeitig eine Führung für eine darin verfahrbar gelagerte, einfach oder doppelt ausgeführte Transport- und Verschiebebühne bilden.

Bei der Anordnung von vier Profilen laufen in diesen sicher geführt zwei Bühnen, die bewegungsmäßig miteinander zu einer Einheit gekoppelt sind und die mit untenseitigen Laufrollen in Führungen der Lager- und Führungsprofile gelagert sind. Im oberen Bereich hat die Einfachbühne zwei und die Doppelbühne vier Reihen an Trag- und Verschieberollen, -ketten, -bänder oder dergleichen, auf denen die Paletten ebenfalls an zwei bzw. drei Stellen sicher abgestützt sind und mit denen die Palette von der Bühne herunter auf die Profile bzw. von den Profilen auf die Bühne bewegt werden kann.

Die Laufrollen und die Trag- und Verschieberollen, -ketten, -bänder oder dergleichen sind jeweils motorisch angetrieben und können gleichzeitig oder nacheinander für die Palettenbewegung verdreht werden — während des Transportes der Palette auf dem Verfahrweg stehen die vorzugsweise eingesetzten Trag- und Verschieberollen still und zum Abgeben bzw. Aufnehmen einer Palette werden die Trag- und Verschieberollen angetrieben und die Laufrollen stehen still oder aber die Laufrollen werden ebenfalls entgegen der Drehrichtung der Trag- und Verschieberollen verdreht ; hierdurch fährt die wagenartige Bühne unter die Palette oder unter dieser Weg und die Trag- und Verschieberollen ziehen die Palette auf die Bühne oder schieben diese von der Bühne ab.

Die Bühne zeigt einen einfachen, stabilen Aufbau mit in fester Ebene liegenden, angetriebenen Rollen, Ketten, Riemen od. dgl. und Auflaufrollen zur schnellen automatischen Aufnahme und Abgabe des Gutes durch Verschieben desselben auf kurzem Fahrweg.

Durch die günstig aufgebauten Lager- und Führungsprofile und die darin laufenden Transport- und Verschiebebühnen ist eine standsichere Abstellung der Paletten und ein schnelles Ein- und Auslagern der Paletten möglich.

Die mit ihrer Längsrichtung auf den Trag- und Verschieberollen sich abstützenden Kufen der Paletten unterliegen einem Längstransport.

Bei der Anordnung von Rollenbahnen in der Bühne zwischen den Trag- und Verschieberollen können auch die Paletten mit ihren Kufen querverlaufend aufgenommen und sicher transportiert und verschoben werden, was dann einen sogenannten Quertransport ergibt, so daß mit dem Erfindungsgegenstand eine Längs- und Queraufnahme bei sicherer Arbeitsweise möglich ist und dadurch unterschiedliche Paletten transportiert werden können.

Diese Fördervorrichtung ist mit ihren Lager- und Führungsprofilen einetagig im oder auf einem Boden (ebenerdig), einer Decke oder dergleichen, eines Gebäudes festlegbar oder aber auch mehretagig ausführbar und dabei in ein Regallager integrierbar.

Die aus den Profilen und einer Einfachbühne oder einer Doppelbühne gebildete Fördervorrichtung ist eine vielseitig einsetzbare Lager- und Transporteinheit.

Anhand der Zeichnungen werden nachfolgend Ausführungsbeispiele gemäß der Erfindung näher erläutert. Es zeigt :

Fig. 1 eine perspektivische Ansicht eines Regallagers mit in den Regalgassen angeordneter, aus Lager- und Führungsprofilen und darin verfahrbar geführten Transport- und Verschiebebühnen für Paletten gebildeter Fördervorrichtung,

Fig. 2 eine Stirnansicht einer eine Palette tragenden, eine in vier Lager- und Führungsprofilen geführte doppelte Transport- und Verschiebebühne, aufweisenden Fördervorrichtung,

Fig. 3 eine Seitenansicht einer wagenartigen Transport- und Verschiebebühne mit untenseitigen Laufrollen und obenseitigen Trag- und Verschieberollen,

Fig. 4 eine schematische Seitenansicht der Transport- und Verschiebebühne während der Abgabe bzw. Aufnahme einer Palette,

Fig. 5 eine Stirnansicht einer aus zwei Lager- und Führungsprofilen und einer darin verfahrbaren Transport- und Verschiebebühne gebildeten Fördervorrichtung,

Fig. 6 eine Draufsicht auf die Fördervorrichtung nach Fig. 2 mit in der Transport- und Verschiebebühne angeordneten Trag- und Verschiebebühne angeordneten Trag- und Verschieberollen sowie Rollenbahnen für den Quer- und Längstransport der Paletten,

Fig. 7 eine Seitenansicht im Teil des Transport- und Verschiebebühne mit Trag- und Verschieberollen sowie Rollenbahnen.

Die erfindungsgemäße Fördervorrichtung, insbesondere für Paletten 1 mit darauf gelagerten Gütern 2 besteht aus mindestens zwei im parallelen Abstand zueinander verlaufenden Lager- und Führungsprofilen 8 und einer, vorzugsweise Rollen als Trag- und Verschiebemittel 11 für die Paletten 1 bzw. Güter aufweisenden, in den Lager- und Führungsprofilen 8 verschiebbar geführten Transport- und Verschiebebühne 7.

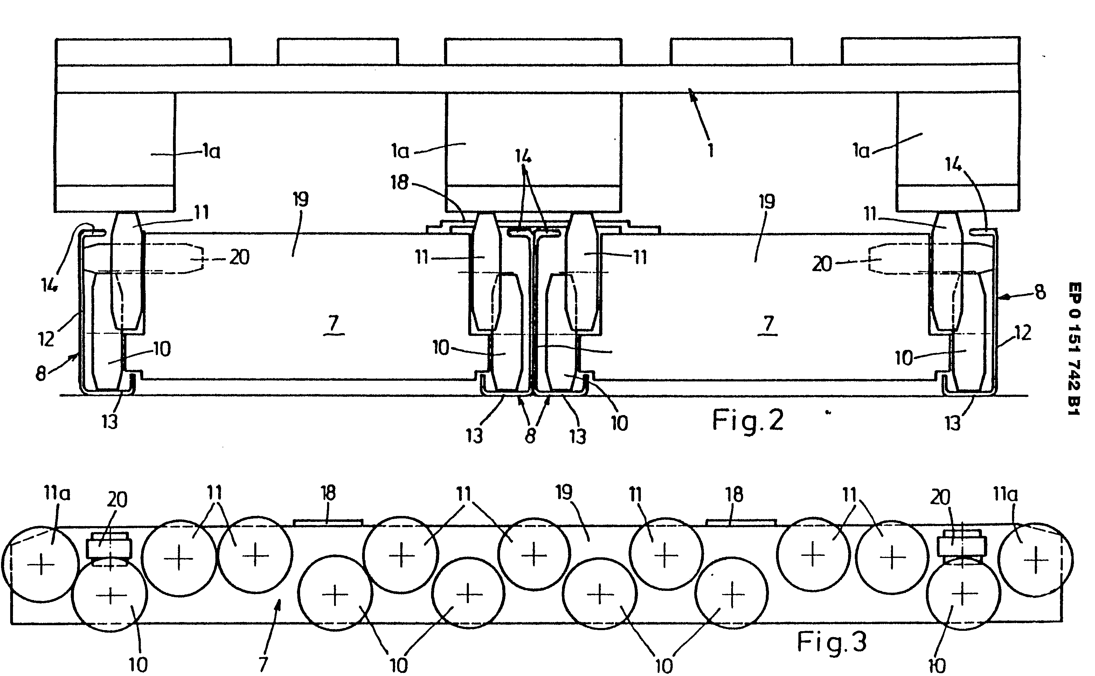

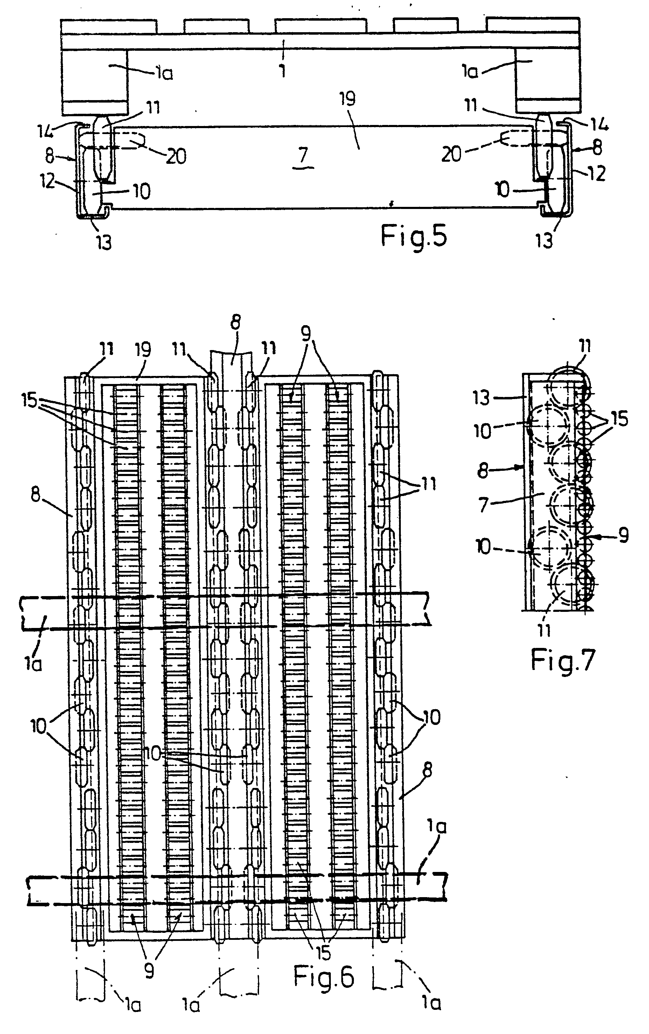

In Fig. 5 ist die aus zwei Lager- und Führungsprofilen 8 und einer darin verschiebbar geführten Transport- und Verschiebebühne 7 gebildete Fördervorrichtung dargestellt und die Fig. 2 zeigt eine Fördervorrichtung in weiterer Ausführung, die zwei bewegungsmäßig miteinander gekoppelte, nebeneinander angeordnete und in insgesamt vier Lager- und Führungsprofilen 8 verfahrbare Transport- und Verschiebebühnen 7 besitzt.

Die beiden bzw. die vier Lager- und Führungsprofile 8 sind identisch ausgebildet und haben jeweils einen J-artigen Querschnitt, der einen aufrechten Stützsteg 12, eine sich untenseitig daran anschließende U-förmige Führung 13 und einen obenseitigen, waagerechten Lagerschenkel 14 bildet.

Bei der Anordnung von nur zwei Lager- und Führungsprofilen 8 gemäß Fig. 2 ist eine Verdoppelung der Anordnung nach Fig. 5 vorgenommen worden ; hierbei stehen die beiden äußeren seitlichen Profile 8 ebenfalls spiegelbildlich zueinander und zwischen diesen beiden äußeren Profilen 8 sind zwei mittlere Profile 8 angeordnet, die auf der Abstandshalbierenden der beiden äußeren Profile 8 liegen und ebenfalls spiegelbildlich zueinander stehen, in dem sie mit ihren aufrechten Stützstegen 12 aneinanderstehen und mit ihren Führungen 13 sowie Lagerstegen 14 voneinander weg und zu jeweils einem äußeren Profil 8 zeigen.

In den beiden Lager- und Führungsprofilen 8 gemäß Fig. 5 ist mittels untenseitiger, in den Führungen 13 laufender Laufrollen 10 eine Transport- und Verschiebebühne 7 verfahrbar geführt und in den beiden jeweils benachbarten und mit ihrem J-Querschnitt aufeinander zu zeigenden Lager- und Führungsprofilen 8 gemäß Fig. 2 ist ebenfalls eine Transport- und Verschiebebühne 7 mittels untenseitiger, in den Führungen 13 laufender Laufrollen 10 verfahrbar vorgesehen, so daß in diesen vier Profilen 8 zwei Transport- und Verschiebebühnen 7 laufen, die durch eine oder mehrere Verbindungen 18 bewegungsmäßig miteinander gekoppelt sind und somit eine doppelte Transport- und Verschiebebühne bilden.

Jede Bühne 7 besitzt ein Gehäuse (Rahmen) 19, an dem seitlich die Laufrollen 10 drehbar gelagert sind, die nach unten über das Gehäuse 19 hinausragen.

Im oberen Bereich des Gehäuses 19 jeder Bühne 7 sind in beiden Seitenbereichen in Bühnen-Längsrichtung mehrere Trag- und Verschieberollen 11, welche einerseits die Paletten 1 während des Verfahrens tragen und andererseits zur Abgabe bzw. zur Aufnahme der Paletten 1 von den bzw. auf die Bühnen 7 dienen, drehbar gelagert, die in gleicher Höhenlage angeordnet sind und nach oben über das Gehäuse 19 hinausragen. Für eine flache Bauweise der Bühnen 7 sind die Trag- und Verschieberollen 11 vorzugsweise zwischen den Laufrollen 10 — also dazu versetzt — angeordnet.

In den beiden Längenendbereichen der Bühne 7 bzw. Bühnen 7 bilden die Trag- und Verschieberollen 11 Auflaufrollen 11a, welche tiefer als die übrigen Rollen 11 angeordnet sind und vorzugsweise mit ihrer Mantelfläche bündig zur Gehäuse-Oberseite verlaufen — durch diese Auflaufrollen 11a wird ein einfaches Aufnehmen bzw. Abgeben der Palette 1 ermöglicht, in dem diese leicht auf die Bühne(n) 7 aufgeschoben bzw. von dieser (diesen) abgeschoben werden kann. Die von Verbindungsstegen, Brücken oder dergleichen gebildeten Verbindungen 18 erstrecken sich jeweils zwischen zwei hintereinander angeordneten Trag- und Verschieberollen 11.

Die waagerechten Lagerschenkel 14 der mittleren Profile 8 erstrecken sich mit ihrer Breitenausdehnung zwischen den benachbarten Trag- und Verschieberollen 11 der beiden Bühnen 7.

Weiterhin lassen sich zur seitlichen Führung der Bühne 7 bzw. der beiden Bühnen 7 in ihrem Gehäuse 19 in den beiden Längenendbereichen und an der den seitlichen Profilen 8 benachbarten Außenseite waagerechte Führungsrollen 20 drehbar lagern, die sich mit ihrer Mantelfläche an dem aufrechten Stützsteg 12 der äußeren Profile 8 unterhalb der Lagerschenkel 14 abwälzen.

Die Laufrollen 10 und die Trag- und Verschieberollen 11 sind jeweils in beide Drehrichtungen motorisch angetrieben, wobei für alle Laufrollen 10 ein Antrieb und für alle Trag- und Verschieberollen 11 ein zweiter Antrieb vorgesehen ist und diese Antriebe sind im Bühnengehäuse 19 untergebracht. Die Lager- und Führungsprofile 8 sind in bevorzugter Weise jeweils einteilig aus Metallblech geformt.

Die Paletten 1 stehen mit ihren Füßen (Kufen) 1a in Längsrichtung der Trag- und Verschieberollen 11 — jede Rollenreihe — und werden von diesen Rollen 11 getragen und auch verfahren; unter dieser Palettenanordnung wird ein sogenannter « Längstransport » verstanden.

Es besteht jedoch auch die Möglichkeit eines « Quertransportes » der Paletten 1, wobei dann ihre Füße (Kufen) 1a quer zu den Rollen 11 (den Rollenreihen) stehen, jedoch dabei auch in Längsrichtung der Rollenreihe verfahren werden; somit bestimmt die Aussage « Längs- und Quertransport » lediglich die Lage der Kufen 1a zu den Reihen an Rollen 11, wobei die Bewegungsrichtung der Paletten 1 gleich ist.

Da bei einem Quertransport (Querlage der Kufen 1a) die Kufen der Palette 1 zwischen benachbarte Rollen 11 absinken können, ist es bevorzugt, zwischen den Trag- und Verschieberollen 11 im Gehäuse 19 der Bühne 7 bzw. Bühnen 7, Rollenbahnen 9 anzuordnen, deren Rollen 15 mit ihrer Drehachse parallel zu den Rollen 11 verlaufen, im Durchmesser kleiner als die Rollen 11 sind und mit ihrer Mantelfläche mindestens nahezu bündig zu den Rollen 11 liegen, das heißt, daß die Rollen 11 und die Rollenbahn-Rollen 15 in einer Höhenebene 15 geringfügig tiefer als die Rollen 11 mit ihrer Mantelfläche liegen.

In Fig. 6 und 7 ist die Anordnung der Rollenbahnen 9 dargestellt, wobei zwischen den Trag- und Verschieberollen 11 jeder Bühne 7 beispielsweise zwei im Abstand parallel nebeneinander verlaufende und sich über die gesamte Länge der Bühne 7 erstreckende Rollenbahnen 9 angeordnet sind.

Diese Rollenbahnen 9 sind vorzugsweise frei umlaufend vorgesehen, lassen sich aber auch motorisch antreiben. In Fig. 6 ist in strichpunktierten Linien die Längslage der Palettenkufen 1a und somit der Längstransport der Paletten 1 durch die Rollen 11 und in dicker gestrichelten Linien der Querlage der Palettenkufen 1a und somit der Quertransport der Paletten 1 durch die Rollenbahnen 9 dargestellt.

Diese Fördervorrichtung läßt sich einetagig auf einem Boden oder einer Decke eines Gebäudes anordnen und bildet dabei praktisch ein Flur-Fördergerät.

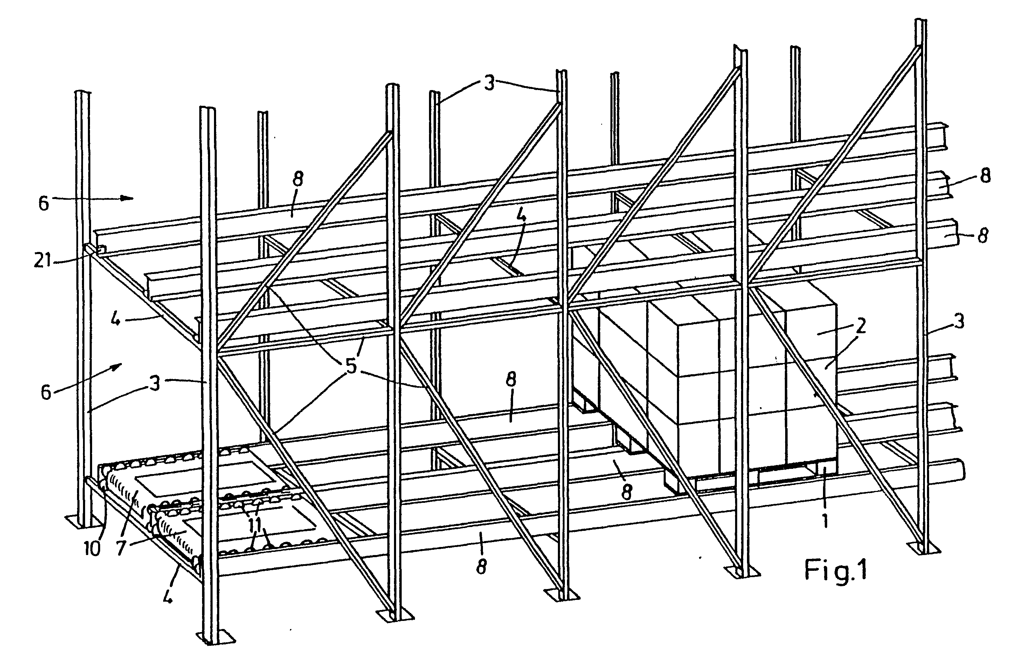

Weiterhin ist diese Fördervorrichtung in einem Regallager gemäß Fig. 1 anzuordnen, wobei in jeder Regalgasse 6 zwei oder vier Profile 8 für eine einfache oder eine Doppelbühne 7 vorgesehen sind. Das Regallager weist beispielsweise mehrere nebeneinander und übereinander angeordnete, von aufrechten Ständern 3, Querträgern 4 und Aussteifungsstützen 5 gebildete Regalgassen auf, in denen die Paletten 1 mit den Gütern 2 nebeneinander und übereinander angeordnet eingelagert werden.

Für das Ein- und Auslagern sind für jede Regalgasse 6 eine oder zwei gleichlaufende Bühnen 7 vorgesehen, die über die gesamte Länge der Regalgasse 6 verfahrbar sind, und in einem Regal integriert sind oder aber gesonderte, durch ein Fahrzeug bewegbare in das Regal ein- und ausfahrbare Einheiten bilden, wobei die Bühnen 7 durch Batterie- oder Netzstrom versorgt werden.

Das Ein- und Auslagern von Gütern in ein bzw. aus einem Regallager geschieht folgendermaßen:

In bevorzugter Weise ist die Bühne 7 auf einem Fahrzeug, wie Regalfahrzeug, Querfahrwagen oder dergleichen auf- und abfahrbar angeordnet und dieses Fahrzeug mit Bühne 7 fährt zu einer Aufnahme- und Abgabestation der Güter. Durch die Bühne 7 kann in einer Aufnahme- und Abgabestation gleichzeitig eine Palette 1 abgegeben und aufgenommen werden, wobei in dieser Station die Auf- und Abgabebahnen in Materialflußrichtung auf einer Mittellinie angeordnet sind und zwischen beide Bahnen die Bühne 7 posioniert wird.

Das Fahrzeug mit der die Palette 1 aufgenommenen Bühne 7 fährt vor eine Regalgasse 6 und dort fährt die Bühne 7 mit Palette 1 vom Fahrzeug herunter und in die Profile 8 ein und in der Regalgasse 6 an den gewünschten Platz. Dort wird die Palette 1 von der Bühne 7 heruntergefahren, so daß sich die Palette 1 auf den Profilen 8 lagernd abstützt.

Dann fährt die Bühne 7 in der Regalgasse 6 zum Fahrzeug zurück und das Fahrzeug mit Bühne 7 holt sich eine andere Palette 1 aus einem Regalfach und geht zum Ausgangspunkt oder einem weiteren Bestimmungsort zurück.

Beim Einlagern fährt die Einfach- und Doppelbühne 7 durch ihre angetriebenen Laufrollen 10 in den U-förmigen (rinnenförmigen) Führungen 13 sicher geführt in Regalgassen-Längsrichtung zum Bestimmungsort (Abstellplatz der Palette 1). Vor oder am Abstellplatz bleibt die Bühne 7 stehen und dann werden die Trag- und Verschieberollen 11 bzw. Rollenbahnen 9 in Drehbewegung versetzt, die dann die Palette 1 von der Bühne 7 herunterschieben, so daß die Palette 1 sich auf die Lagerschenkel 14 absetzt.

Es besteht auch die Möglichkeit, die Bühne 7 beim Abschieben der Palette 1 entgegen der Abschieberichtung zu verfahren, so daß sich beide Bewegungsrichtungen überlappen und dadurch ein schnelles Abgeben der Palette 1 erfolgt.

Zum Herausnehmen einer Palette 1 aus dem Regal fährt die Einfach- oder Doppelbühne 7 unter die auf den Lagerschenkel 14 stehende Palette 1 und diese wird durch die tieferliegenden Auflaufrollen 11a allmählich angehoben. Die Bühne 7 fährt dann weiter unter die Palette 1 und ihre oberen angetriebenen, entgegen der Fahrtrichtung umlaufenden Rollen 11 oder Rollenbahnen 9 ziehen dann die Palette 1 auf die Bühne 7.

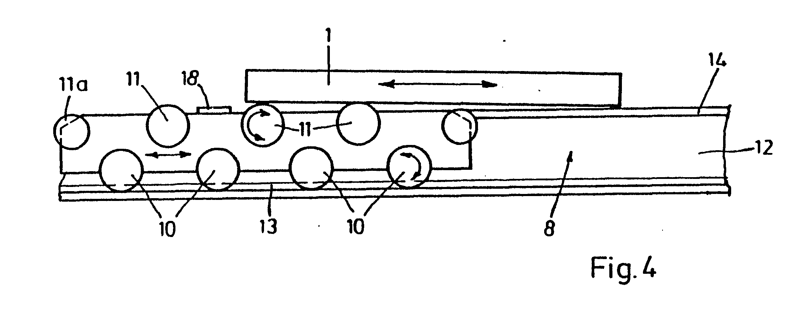

Ist die Palette 1 vollkommen auf der Bühne 7, bleiben die Trag- und Verschieberollen 11 bzw. Rollenbahnen 9 stehen und dann fährt die Bühne 7 die Palette 1 in der Regalgasse 6 zum ausgabeseitigen Regalgassenende. In Fig. 4 ist das Abgeben bzw. Aufnehmen einer Palette 1 schematisch dargestellt.

Die drei Kufen 1a einer breiten Palette 1 werden durch die vier Lagerschenkel 14 in der abgestellten Stellung sicher unterstützt und ein Durchbiegen der Palette 1 ist durch die mittleren Lagerschenkel 14 ausgeschlossen.

In den Längenendbereichen der Lager- und Führungsprofile 8 sind Begrenzungsanschläge 21 vorgesehen, die ein Herausfahren der in das Regal integrierten Bühne 7 aus den Führungen 8 verhindern und durch die in Verbindung mit den Führungen 13 die Bühne 7 mit den Profilen 8 eine einheitliche Lager- und Transporteinheit bildet.

Bei einem weiteren bevorzugten, jedoch nicht dargestellten Ausführungsbeispiel sind die Tragrollen 11 von endlos umlaufenden, motorisch angetriebenen Ketten, Bändern, Riemen oder dergleichen gebildet.

Mit der erfindungsgemäßen Bühne 7 lassen sich auch Güter der verschiedensten Art oder Paletten 1 zum Beispiel Kisten, Metallplattenstapel, Holzstapel, Kästen oder dergleichen transportieren und ein- und auslagern.

Bei einer weiteren, nicht dargestellten Ausführungsform hat das Profil 8 keinen J-artigen Querschnitt, sondern einen U-Querschnitt, wobei das U flachliegt und somit die U-Öffnung zur Seite zeigt. Durch diesen U-Querschnitt entfällt der bisher beim J-Querschnitt nach oben gerichtete untere Randsteg an der unteren U-Führung 13, so daß hier nur ein waagerechter Führungsschenkel 13 vorhanden ist, der mit dem Stützsteg 12 eine Winkelführung bildet, die seitlich frei ist, was in vorteilhafter Weise ein Ansammeln von Schmutz in der U-Führung 13 vermeidet, da der Schmutz oder dergleichen aus der Winkelführung (vom Führungsschenkel 13) seitlich herausfallen kann.

**Patentansprüche**

1. Fördervorrichtung für Güter der verschiedensten Art mit/ohne Paletten (1), wobei dieselbe aus mindestens zwei im parallelen Abstand nebeneinander verlaufenden Lager- und Führungsprofilen (8) und einer eine Tragaufnahme für die Güter bzw. Paletten (1) aufweisenden, in den Lager- und Führungsprofilen (8) mittels antreibbarer Laufrollen (10) und durch Führungsrollen (20) verfahrbar geführten Transport- und Verschiebebühne (7) besteht, dadurch gekennzeichnet, daß die Transport- und Verschiebebühne (7) als Tragaufnahme für die Güter bzw. Paletten (1) im oberen Bereich in einer gemeinsamen, festen Höhenlage liegende, motorisch antreibbare Trag- und Verschieberollen (11), Rollenbahnen (9) oder Umschlingungstriebe aufweist, denen in den beiden in Transport- und Verschieberichtung liegenden Längenendbereichen der Transport- und Verschiebebühne (7) jeweils tiefer als die tragende Fläche der Trag- und Verschieberollen (11), Rollenbahnen (9) oder Umschlingungstriebe liegende, eine schräge Auf- und Abfahrbahn für die Güter bzw. Paletten (1) bildende, motorisch antreibbare Auflaufrollen (11a) zugeordnet sind.

2. Fördervorrichtung nach Anspruch 1, dadurch gekennzeichnet, daß die Transport- und Verschiebebühne (7) untenseitig herausragende, in je eine Führung (13) der Lager- und Führungsprofile (8) eingreifende Laufrollen (10) hat und an ihren Außenseiten waagerechte, sich zur Seitenführung an aufrechten Stützstegen (12) der Lager- und Führungsprofile (8) abwälzende Führungsrollen (20) aufweist.

3. Fördervorrichtung nach Anspruch 1 oder 2, dadurch gekennzeichnet, daß die Laufrollen (10), die Trag- und Verschieberollen (11), die Rollenbahnen (9) und die Umlenkrollen der von Ketten, Bändern, Riemen od. dgl. gebildeten Umschlingungstriebe an einem Gehäuse (19) der Transport- und Verschiebebühne (7) drehbar gelagert und durch separate, motorische Antriebe angetrieben sind und dabei das Gehäuse (19) in sich die Antriebe aufnimmt und mit seiner Oberseite mindestens nahezu bündig zu waagerechten Lagerschenkeln (14) der Lager- und Führungsprofile (8) verläuft.

4. Fördervorrichtung nach Anspruch 1, dadurch gekennzeichnet, daß die in Reihe angeordneten Trag- und Verschieberollen (11) zwischen den in Reihe angeordneten Laufrollen (10) und somit versetzt in der Bühne (7) gelagert sind.

5. Fördervorrichtung nach Anspruch 2, dadurch gekennzeichnet, daß jedes Lager- und Führungsprofil (8) einen J-artigen Querschnitt mit einem aufrechten Stützsteg (12), einer untenseitig sich daran anschließenden U-förmigen Führung (13) und einem obenseitigen, waagerechten Lagerschenkel (14) hat.

6. Fördervorrichtung nach Anspruch 2, dadurch gekennzeichnet, daß jedes Lager- und Führungsprofil (8) einen flachliegenden U-Querschnitt mit einem aufrechten Stützsteg (12), einem obenseitigen, waagerechten Lagerschenkel (14) und einem untenseitigen, mit dem Stützsteg (12) eine Winkelführung bildenden waagerechten Führungsschenkel (13) hat.

7. Fördervorrichtung nach Anspruch 6, dadurch gekennzeichnet, daß zwei nebeneinander angeordnete Transport- und Verschiebebühnen (7) durch mindestens eine Brücke (Querverbindung) (18) bewegungsmäßig miteinander zu einer Doppelbühne verbunden sind, und dabei diese beiden Bühnen (7) in vier Lager- und Führungsprofilen (8) verschiebbar geführt sind.

8. Fördervorrichtung nach Anspruch 7, dadurch gekennzeichnet, daß die doppelte Transport- und Verschiebebühne (7) zwischen ihren Reihen an Trag- und Verschieberollen (11) jeweils eine oder mehrere, in Transport- und Verschieberichtung verlaufende Rollenbahnen (9) für ein Transportieren und Verschieben von mit ihren Füßen (Kufen) (1a) quer aufgenommene Paletten (1) ausgestattet ist, wobei die angetriebenen Rollen (15) der Rollenbahnen (9) mit ihrer Mantelfläche mindestens nahezu mit den Trag- und Verschieberollen (11) in einer Höhenebene liegen (Fig. 6 und 7).

9. Fördervorrichtung nach Anspruch 2 oder 7, dadurch gekennzeichnet, daß in den Längenendbereichen der Lager- und Führungsprofile (8) Begrenzungsanschläge (21) für den Längsverfahrweg der mit den jeweils aus Metall einteilig geformten Profilen (8) eine Baueinheit bildenden Bühne (7) angeordnet sind (Fig. 1).

**Claims**

1. Conveyor system for all kinds of articles, with or without pallets (1), comprising at least two bearing and guiding sections (8) spaced in parallel alongside one another and a transport and feed platform (7) having a supporting locator for the articles and/or pallets (1) and movable in the bearing and guiding sections (8) by means of pulleys (10) and using guide rollers (20), characterised in that as the supporting locator for the articles and/or pallets (1), in its upper portion the transport and feed platform (7) has motor-driven support and feed rollers (11), roller conveyors (9) or loop propulsion means, which are set at a common, fixed height, to which motor-driven ascent rollers (11a) forming an inclined « up » and « down » track for the articles and/or pallets (1) are associated in both of the longitudinal end portions of the transport and feed platform (7) in the transport and feed direction, said ascent rollers (11a) each being set lower than the support surface of the support and feed rollers (11), roller conveyors (9) or loop propulsion means.

2. Conveyor system according to claim 1, characterised in that projecting from its lower surface the transport and feed platform (7) has pulleys (10) which each engage in a channel (13) on the bearing and guiding sections (8), and on its external faces has horizontal guide rollers (20) which run against upright support stays (12) of the bearing and guide sections (8) for lateral guidance.

3. Conveyor system according to claim 1 or 2, characterised in that the pulleys (10), the support and feed rollers (11), the roller conveyors (9) and the deflection rollers of the loop propulsion means constituted by chains, belts or the like are rotary-mounted on a housing (19) for the transport and feed platform (7) and are powered by separate motorised drives, and the housing (19) itself accommodates the drives and its upper surface is at least virtually flush with horizontal bearing flanges (14) of the bearing and guide sections (8).

4. Conveyor system according to claim 1, characterised in that the support and feed rollers (11) disposed in a row are mounted between the pulleys (10) disposed in a row and hence offset in the platform (7).

5. Conveyor according to claim 2, characterised in that each bearing and guide section (8) has a J-shaped cross-section with an upright support stay (12), contiguous with the latter a U-shaped channel (13) on its lower surface, and a horizontal bearing flange (14) on its upper surface.

6. Conveyor according to claim 2, characterised in that each bearing and guide section (8) has a flat U-shaped cross-section with an upright support stay (12), a horizontal bearing flange (14) on its upper surface and a horizontal guide flange (13) on its lower surface forming an angular guide with the support stay (12).

7. Conveyor system according to claim 6, characterised in that two transport and feed platforms (7) arranged alongside one another are kinetically interconnected by at least one bridge (transverse stay) (18) to form a double platform, and said two platforms (7) are displaceably mounted in four bearing and guide sections (8).

8. Conveyor system according to claim 7, characterised in that between its rows of support and feed rollers (11), the doubled transport and feed platform (7) respectively has one or more roller conveyors (9) running in the transport and feed direction for transporting and feeding pallets (1) received with their feet (runners) (1a) oriented, the driven rollers (15) of the roller conveyors (9) lying with their lateral surface at least nearly on a plane level with the support and feed rollers (11) (Figs. 6 and 7).

9. Conveyor system according to claim 2 or 7, characterised in that in the longitudinal end portions of the bearing and guiding sections (8) there are disposed limit stops (21) for the longitudinal displacement path of the platform (7), which with the corresponding integral metal sections (8) forms a constructional unit (Fig. 1).

**Revendications**

1. Appareil de transport pour toutes sortes d'articles avec/sans palettes (1), composé d'au moins deux profilés de logement et de guidage (8) s'étendant à intervalle parallèle, l'un à côté de l'autre, et d'une plateforme de transport et de manutention (7) présentant une surface destinée à recevoir les articles ou les palettes (1), convoyable dans les profilés de logement et de guidage (8) à l'aide de galets de roulement (10) actionnables, et dirigée par des rouleaux de guidage (20), appareil de transport caractérisé par le fait que la plateforme de transport et de manutention (7), en tant que surface destinée à recevoir des articles et des palettes (1), présente, dans le secteur supérieur, à un niveau commun fixe, des rouleaux porteurs et de manutention (11), des transporteurs à galets (9) ou des dispositifs d'entraînement en boucle, actionnables par moteur, auxquels sont adjoints, dans les deux secteurs finaux longitudinaux de la plateforme de transport et de manutention (7), situés dans le sens de transport et de manutention, des rouleaux de transition (11a) se trouvant à un niveau inférieur à celui de la surface portante des rouleaux porteurs et de manutention (11), transporteurs à galets (9) ou dispositifs d'entraînement en boucle, pour former une voie de montée ou de descente pour les articles ou les palettes (1) et pouvant être entraînés par moteur.

2. Appareil de transport selon revendication 1, caractérisé par le fait que la plateforme de transport et de manutention (7) possède des galets de roulement (10) faisant saillie sous elle et mordant chacun dans le guidage (13) respectif des profilés de logement et de guidage (8), et présente, à ses côtés extérieurs, des rouleaux de guidage (20) horizontaux roulant contre des entretoises (12) verticales des profilés de logement et de guidage (8) aux fins de guidage latéral.

3. Appareil de transport selon revendication 1 ou 2, caractérisé par le fait que les galets de roulement (10), les rouleaux porteurs et de manutention (11), les transporteurs à galets (9) et les poulies de déviation des entraînements en boucle formés par des chaînes, des courroies, des sangles ou des dispositifs analogues, sont montés, pivotant sur paliers, à un carter (19) de la plateforme de transport et de manutention (7) et commandés séparément par moteurs, les entraînements étant logés dans le carter dont la face supérieure est au moins à peu près au niveau des montants de paliers (14) des profilés de logement et de guidage (8).

4. Appareil de transport selon revendication 1, caractérisé par le fait que les rouleaux porteurs et de manutention (11), disposés en rangées entre les rangs de galets de roulement (10) et, de ce fait, alternés, sont logés, tournant sur paliers, dans la plateforme (7).

5. Appareil de transport selon revendication 2, caractérisé par le fait que chaque profilé de logement et de guidage (8) présente une section transversale en J avec une entretoise verticale (12), un guidage en forme de U y faisant suite, en bas (13) et une jambe de palier (14) horizontale en haut.

6. Appareil de transport selon revendication 2, caractérisé par le fait que chaque profilé de logement et de guidage (8) présente une section transversale à plat en forme de U avec une entretoise verticale (12), une jambe de palier horizontale (14), en haut, et une jambe de guidage horizontale (13), en bas, formant un angle avec l'entretoise (12).

7. Appareil de transport selon revendication 6, caractérisé par le fait que deux plateformes de transport et de manutention (7), disposées l'une à côté de l'autre, sont reliées ensemble, en une double plateforme, par au moins un pont (jonction transversale) (18), conformément au mouvement, et que, ce faisant, ces deux plateformes (7) sont logées, mobiles, dans quatre profilés de logement et de guidage (8).

8. Appareil de transport selon revendication 7, caractérisé par le fait que la double plateforme de transport et de manutention (7) est équipée, entre ses rangées de rouleaux porteurs et de manutention (11), d'un ou plusieurs transporteurs à galets (9) tournant dans le sens de transport et de manutention aux fins de transport et de manutention de palettes (1), saisies transversalement par leurs pieds (patins) (1a), la surface du corps des rouleaux commandés (15) des transporteurs à galets (9) étant au moins presqu'au niveau des rouleaux porteurs et de manutention (11) (cf. fig. 6 et 7).

9. Appareil de transport selon revendication 2 ou 7, caractérisé par le fait que des butées de limitation (21) sont disposées, dans la zone longitudinale des extrémités des profilés de logement et de guidage (8) limitant le parcours longitudinal de la plateforme (7) qui forme une unité de construction avec les profilés en métal (8) façonnés d'une seule pièce (cf. fig. 1).

Fig.1

Fig.2

Fig.3

EP 0 151 742 B1

Fig. 4

Fig.5

Fig.6

Fig.7